(19) Europäisches Patentamt
European Patent Office
Office européen des brevets

(11) EP 4 620 651 A1

(12) EUROPEAN PATENT APPLICATION
published in accordance with Art. 153(4) EPC

(43) Date of publication:
24.09.2025 Bulletin 2025/39

(51) International Patent Classification (IPC):
B29C 45/76 (2006.01)

(21) Application number: 23891160.6

(52) Cooperative Patent Classification (CPC):
B29C 45/76

(22) Date of filing: 19.09.2023

(86) International application number:
PCT/JP2023/033930

(87) International publication number:
WO 2024/106002 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.11.2022 JP 2022182708

(71) Applicant: The Japan Steel Works, Ltd.
Tokyo 141-0032 (JP)

(72) Inventors:
• YOKOTA, Takumi
Tokyo 141-0032 (JP)
• SAEKI, Akihiko
Tokyo 141-0032 (JP)
• AKAGI, Takashi
Tokyo 141-0032 (JP)

(74) Representative: Simmons & Simmons LLP
(Munich)
Lehel Carré
Gewürzmühlstraße 11
80538 Munich (DE)

(54) **MOLDING CONDITION CORRECTING DEVICE, MOLDING MACHINE, MOLDING CONDITION CORRECTING METHOD, AND COMPUTER PROGRAM**

(57) This molding condition correcting device for correcting a molding condition of a molding machine comprises: an acquiring unit for acquiring measurement data obtained by measuring a state of the molding machine, and inspection result data obtained by inspecting a condition of a molded product molded by the molding machine; and a learning device which learns a relationship between the measurement data and the inspection result data, and a correction amount of the molding condition, and which determines the correction amount on the basis of the acquired measurement data and inspection result data. At least one of the measurement data, the inspection result data and the correction amount handled by the learning device is standardized or normalized.

FIG.5

**Description**

Technical Field

The present invention relates to a molding condition modification device, a molding machine, a molding condition modification method and a computer program.

Background Art

In the case of performing injection molding using an injection molding machine, it is necessary that a condition setting work be first performed for modifying setting values of items for various molding conditions to obtain molding conditions. The modification of molding conditions is performed based on the operator's experience and requires repeated trial and error to obtain appropriate molding conditions. The same applies to extrusion molding using an extruder.

Patent Literature 1 discloses an injection molding machine system for modifying molding conditions of an injection molding machine using reinforcement learning.

Citation List

Patent Literature

Patent Literature 1: Japanese Patent Application Laid-Open Publication No. 2019-166702

Summary of Invention

Technical Problems

Building a learner (AI model) for modifying molding conditions, however, needs training data of several thousands of shots. Moreover, one learner is required for each mold or for each product.

The data necessary for learning contains defective product data as well, resulting in intentional production of defective products. Manufacturing a large number of defective products in a mass production factory presents a technical problem of adversely affecting the production plan of the factory.

An object of the present disclosure is to provide a molding condition modification device, a molding machine, a molding condition modification method and a computer program including a learner as a standard model that is used for modifying molding conditions and is applicable to manufacture of any molded product.

Solution to Problems

A molding condition modification device according to one aspect of the present disclosure is a molding condition modification device modifying a molding condition of a molding machine, comprising: an acquisition unit that acquires measurement data obtained by measuring a state of the molding machine and inspection result data obtained by inspecting a state of a molded product molded by the molding machine; and a learner having trained with a relationship between the measurement data as well as the inspection result data and a modification amount of the molding condition, and determining the modification amount based on the acquired measurement data and inspection result data, and at least one of the measurement data, the inspection result data and the modification amount handled by the leaner is standardized or normalized.

A molding machine according to one aspect of the present disclosure is provided with the above-described molding condition modification device.

A molding condition modification method according to one aspect of the present disclosure is molding condition modification method modifying a molding condition of a molding machine, comprises: acquiring measurement data obtained by measuring a state of the molding machine and inspection result data obtained by inspecting a state of a molded product molded by the molding machine; and determining a modification amount based on the acquired measurement data and inspection result data by using a learner having trained with a relationship between the measurement data as well as the inspection result data and the modification amount of the molding condition, and at least one of the measurement data, the inspection result data and the modification amount handled by the leaner is standardized or normalized.

A computer program according one aspect of the present disclosure is a computer program causing a computer to execute processing of modifying a molding condition of a molding machine, the computer executes processing of: acquiring measurement data obtained by measuring a state of the molding machine and inspection result data obtained by inspecting a state of a molded product molded by the molding machine; and determining a modification amount based on the acquired measurement data and inspection result data by using a learner having trained with a relationship between the measurement data as well as the inspection result data and the modification amount of the molding condition, and the determining determines the modification amount using the learner for which at least one of the measurement data, the inspection result data and the modification amount is standardized or normalized.

Advantageous Effects of Invention

According to the present disclosure, it is possible to provide a molding condition modification device, a molding machine, a molding condition modification method and a computer program including a learner as a standard model that is used for modifying molding conditions and is applicable to manufacture of any molded product.

Brief Description of Drawings

FIG. 1 is a schematic view depicting an example of the configuration of an injection molding machine according to a present embodiment.
FIG. 2 is a block diagram depicting an example of the configuration of a molding condition modification device according to the present embodiment.
FIG.3 is a functional block diagram of a processor according to the present embodiment.
FIG. 4 is a flowchart depicting a generation and application method for a learner (standard model) according to the present embodiment.
FIG. 5 is a conceptual diagram depicting an application method for the learner (standard model) according to the present embodiment.
FIG. 6 is a conceptual diagram depicting a method for additional learning of the learner (standard model) according to the present embodiment.
FIG. 7 is a flowchart depicting a processing procedure for generating the learner (standard model).
FIG. 8 is a flowchart depicting a processing procedure for introducing the learner (standard model).
FIG. 9 is a flowchart depicting a processing procedure for molding.
FIG. 10 is a flowchart depicting a processing procedure for additional learning of the learner (standard model).

Description of Embodiments

Specific examples of a molding condition modification device, a molding machine, a molding condition modification method and a computer program according to an embodiment of the present invention will be described below with reference to the drawings. At least parts of the embodiments described below may arbitrarily be combined. It should be noted that the present invention is not limited to these examples, but is indicated by the scope of claims, and is intended to include all modifications within the meaning and scope equivalent to the scope of claims.

<Summary of Present Embodiment>

The present embodiment describes an example where a learner (AI model) to be used for modifying molding conditions specific to certain defects such as a burr and a short shot, for example, is built in advance and is applied to another metal mold. Three parameters that are largely associated with the operation of the learner used for modifying molding conditions are standardized and normalized to thereby build a learner that absorbs the difference in metal molds. The three parameters to be standardized or normalized are measurement data obtained by measuring a state of the injection molding machine, inspection result data obtained by inspecting the state of a molded product through the injection molding and a modification amount of the molding condition (amount of a molding condition to be modified with a single modification). The learner where the parameters are standardizes and normalizes is appropriately referred to as a standard model. The standard model can appropriately modify molding conditions even for a metal mold different from the metal mold used for building the standard model. **In** addition, the standard model can additionally be trained with data collected with different metal molds, which improves its performance.

<Configuration of Injection Molding Machine>

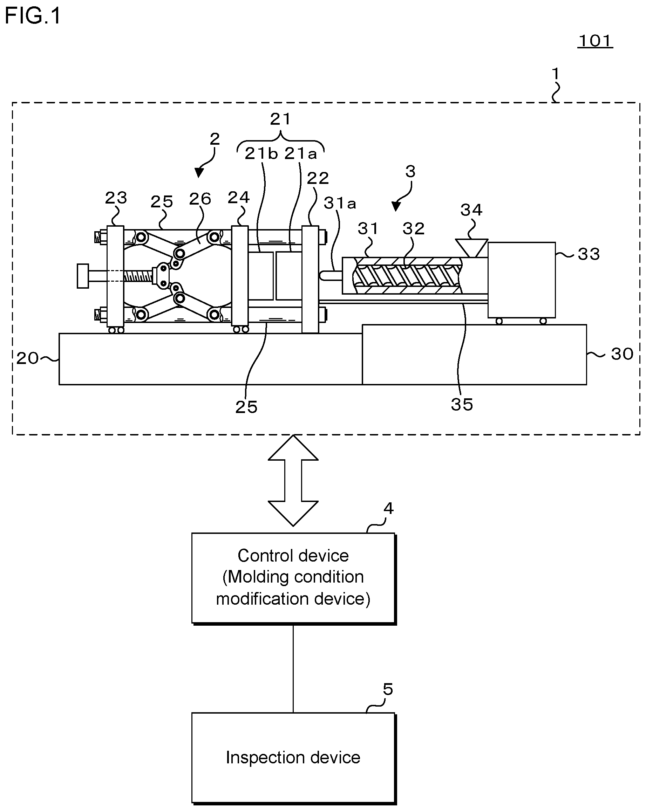

FIG. 1 is a schematic view depicting an example of the configuration of an injection molding machine 101 according to the present embodiment. The injection molding machine 101 according to the present embodiment is provided with a mold clamping device 2 for clamping a metal mold 21, an injection device 3 for plasticizing and injecting molding material, a control device 4 and an inspection device 5. The mold clamping device 2 and the injection device 3 constitute a molding machine body 1. The control device 4 functions as a molding condition modification device according to the present embodiment.

The mold clamping device 2 is provided with a fixed platen 22 fixed on a bed 20, a mold clamping housing 23 slidably provided over the bed 20 and a movable platen 24 that similarly slides over the bed 20. The fixed platen 22 and the mold clamping housing 23 are coupled with multiple, for example, four tie-bars 25, 25.... The movable platen 24 is configured to be slidable between the fixed platen 22 and the mold clamping housing 23. Between the mold clamping housing 23 and the movable platen 24, a mold clamping mechanism 26 is provided.

The mold clamping mechanism 26 is constructed by a toggle mechanism, for example. Note that the mold clamping mechanism 26 may be composed of a direct pressure mold clamping mechanism, that is, a mold clamping cylinder. The fixed platen 22 and the movable platen 24 are respectively provided with a fixed mold 21a and a movable mold 21b, and the metal mold 21 is configured to be opened and closed when the clamping mechanism 26 is driven.

The injection device 3 is provided on a base 30. The injection device 3 includes a heating cylinder 31 having a nozzle 31a at the tip and a screw 32 provided inside the heating cylinder 31 so as to be rotatably disposed in a circumferential direction and an axial direction. The screw 32 is driven in rotational and axial directions by a drive mechanism 33. The drive mechanism 33 is composed of a rotary motor for driving the screw 32 in the rotational direction, a motor for driving the screw 32 in the axial direction, and the like. Since the drive mechanism 33 depicted in FIG. 1 is covered with a cover, the internal configuration is not illustrated.

Near the rear of the heating cylinder 31, a hopper 34 for inputting molding materials is provided. The injection molding machine 101 is provided with a nozzle touch device 35 that moves the injection device 3 in the front-back direction (leftright direction in FIG. 1). When the nozzle touch device 35 is driven, the injection device 3 is configured to move forward so that the nozzle 31a of the heating cylinder 31 touches a contact portion of the fixed platen 22.

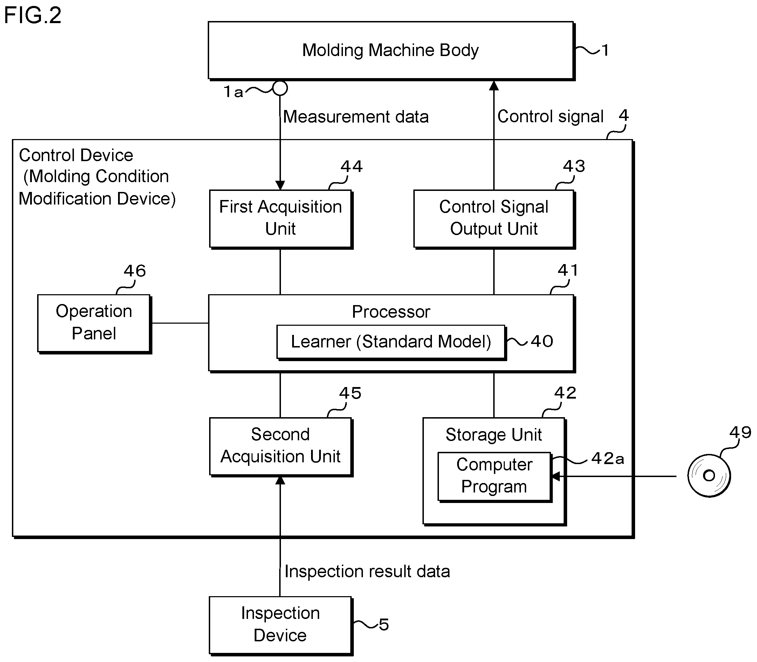

FIG. 2 is a block diagram depicting an example of the configuration of the control device 4 according to the present embodiment. The control device 4, which is a computer that controls the operation of the mold clamping device 2 and the injection device 3, is provided with a processor 41, a storage unit 42, a control signal output unit 43, a first acquisition unit 44, a second acquisition unit 45 and an operation panel 46 as hardware structure. The processor 41 has a learner 40 as a functional part. Note that a part of the learner 40 may be realized in hardware.

The control device 4 is a device for modifying molding conditions of the injection molding machine 101 (see FIG. 1). Note that the control device 4 may be a server device connected to a network. Moreover, the control device 4 may be configured with multiple computers to perform distributed processing, may be realized by multiple virtual machines set up in a single server, or may be realized using a cloud server.

The processor 41 includes an arithmetic processing circuit such as a CPU (Central Processing Unit), a multi-core CPU, a GPU (Graphics Processing Unit), a General-purpose computing on graphics processing units (GPGPU), a Tensor Processing Unit (TPU), an Application Specific Integrated Circuit (ASIC), an Field-Programmable Gate Array (FPGA) and an Neural Processing Unit (NPU), an internal storage device such as a ROM (Read Only Memory) and a RAM (Random Access Memory), an I/O terminal, a timer unit and the like. The processor 41 implements a molding condition modification method according to the present embodiment by executing a computer program (program product) 42a stored in the storage unit 42, which will be described later. Note that each functional part of the control device 4 may be realized in software, or some or all of the functional parts thereof may be realized in hardware.

The storage unit 42 is a nonvolatile memory such as a hard disk, an EEPROM (Electrically Erasable Programmable ROM) or a flash memory. The storage unit 42 stores the computer program 42a for performing reinforcement learning of the molding condition modification method according to the state of the injection molding machine 101 and a molded product, and causing the computer to execute molding condition modification processing. The storage unit 42 stores various coefficients that characterize the learner 40 as a reinforcement learning model.

The computer program 42a according to the present embodiment may be recorded on a recording medium 49 so as to be readable by the computer. The storage unit 42 stores the computer program 42a read from the recording medium 49 by a reader. The recording medium 49 is a semiconductor memory such as a flash memory. Furthermore, the recording medium 49 may be an optical disc such as a CD (Compact Disc)-ROM, a DVD (Digital Versatile Disc)-ROM, or a BD (Blu-ray (registered trademark) Disc). Moreover, the recording medium 49 may be a magnetic disk such as a flexible disk or a hard disk, or a magneto-optical disk, for example.

In addition, the computer program 42a according to the present embodiment may be downloaded from an external server connected to a communication network and may be stored in the storage unit 42.

The control signal output unit 43 outputs to the molding machine body 1 a control signal for controlling the operation of the injection molding machine 101 according to the control by the processor 41based on the molding conditions.

The operation panel 46 is an interface for setting the molding conditions or the like of the injection molding machine 101 and operating the action of the injection molding machine 101. The operation panel 46 is provided with a display panel and an operation device. The display panel, which is a display device such as a liquid crystal display panel, an organic EL display panel or the like, displays a reception screen to receive the settings of the operating conditions of the injection molding machine 101 according to the control by the processor 41 and displays the state of the injection molding machine 101 and the implementation status of the molding condition modification method according to the present embodiment. The operation device, which is an input device for inputting and modifying the molding conditions of the injection molding machine 101, includes an operation button, a touch panel and the like. The operation device provides the processor 41 with data indicating received molding conditions.

To the injection molding machine 101, setting values related to various molding conditions are set. The molding condition includes an injection start position, an in-mold resin temperature, a nozzle temperature, a cylinder temperature (heater temperature), a hopper temperature, a mold clamping force, an injection velocity, an injection acceleration, an injection peak pressure (injection pressure) and an injection stroke. The molding condition further includes a cylinder-tip resin pressure, a reverse flow preventive ring seating state, a holding pressure, a holding pressure switch-over velocity, a holding pressure switch-over position, a holding pressure completion position, a cushion position, a back pressure and a weighing torque. The molding condition further includes a weighing completion position, a screw retreat speed, a cycle time, a mold closing time, an injection time, a holding pressure time, a weighing time and a mold opening time. The molding condition further includes cooling time, the number of screw rotations, a mold opening and closing velocity, an ejection velocity and the number of ejections.

The injection molding machine 101 to which these setting values have been set, is operated according to these setting values. Of the above-described molding conditions, the holding pressure, holding pressure switch-over position and injection velocity are especially related to molding defects such as burrs and a short shot of a molded product. The present embodiment describes an example where a holding pressure [Mpa], a holding pressure switch-over position [mm] and an injection velocity [mm/sec] are modified.

The first acquisition unit 44 is an input circuit for acquiring measurement data obtained by measuring the state of the injection molding machine 101.

The mold clamping device 2 and the injection device (see FIG. 1) are provided with one or more sensors 1a for detecting physical quantity that is information indicating the state of the injection molding machine 101 and is necessary to control the operation of the molding machine body 1. The sensor 1a is connected to the first acquisition unit 44. The physical quantity includes, for example, voltage, current, temperature, humidity, torque, forces such as pressure, speed, acceleration, angle of rotation and position of a movable part and the amount or rate of flow of a fluid. The sensor 1a includes, for example, a current sensor, a voltage sensor, a temperature sensor, a humidity sensor, a torque sensor, a pressure sensor, a speed sensor, an acceleration sensor, a rotation angle sensor, a positioning sensor, a flow sensor and a current meter. The sensor 1a outputs a measurement signal indicating a physical quantity to the control device 4. The measurement signal output from the sensor 1a is input to the first acquisition unit 44, and the first acquisition unit 44 acquires the measurement signal as measurement data.

The measurement data is data indicating an operational status of the injection molding machine 101 and includes, for example, a cycle time [seconds], injection time [seconds], a holding pressure time [seconds], a holding pressure switch-over position [mm], a holding pressure switch-over velocity [mm/seconds], a holding pressure switch-over pressure [Pa], a cushion position [mm], a holding pressure switch-over completion position [mm], a weighing time [seconds], a back pressure [Pa] and a weighing completion position [mm].

The second acquisition unit 45 is an input circuit for acquiring inspection result data obtained by inspecting the state of a molded product molded by the injection molding machine 101. The inspection device 5 is connected to a second output unit. The inspection device 5, which is a camera, a range sensor, a weight scale and the like for detecting the state of a molded product, measures physical quantities related to the state of a molded product and acquires inspection result data indicating a state of a molded product based on the physical quantity data obtained by measurement. The inspection result data is, for example, data indicating a burr area [mm$^2$] and a short shot area [mm$^2$] for a molded product.

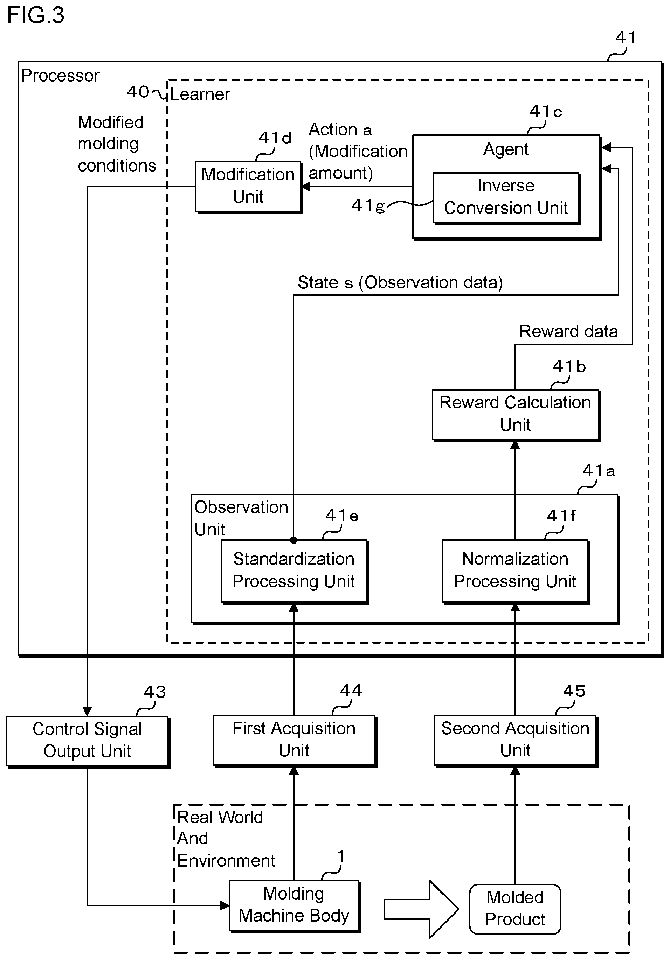

FIG. 3 is a functional block diagram of the processor 41 according to the present embodiment. The processor 41 of the control device 4 functions as a learner 40. The learner 40 is provided with an observation unit 41a, a reward calculation unit 41b, an agent 41c and a modification unit 41d. Note that the learner 40 and each functional part of the control device 4 may be realized in software, or a part or all of the functional parts may be realized in hardware.

The observation unit 41a acquires measurement data and inspection result data from the first acquisition unit 44 and the second acquisition unit 45, respectively. The observation unit 41a is provided with a standardization processing unit 41e for standardizing measurement data acquired by the first acquisition unit 44 and a normalization processing unit 41f for normalizing inspection result data acquired by the second acquisition unit 45.

The standardization processing unit 41e standardizes the measurement data acquired by the first acquisition unit 44 using an average and a standard deviation of the measurement data calculated in advance for data standardization before the start of mass molding production (Ave-Std scale conversion). For example, the standardization processing unit 41e standardizes the measurement data so that the average value and the standard deviation of the measurement data obtained by the first acquisition unit 44 are 0 and 1, respectively, as expressed in Equation (1) below. The value of the standardized measurement data can be defined as 0 to 255 of a predetermined numerical range such as +/- 3 σ. The scale of the standardized measurement data may arbitrarily be set by checking the distribution of the measurement data. The scale may vary depending on types of measurement data. If the standardized measurement data falls out of the predetermined numerical range such as +/- 3 $\sigma$, the maximum or minimum value of the numerical range may be used as standardized measurement data. If the standardized measurement data often falls outside the predetermined numerical range such as +/- 3 $\sigma$, standardization may be performed using the median or n-quantile (n is an integer equal to or larger than 3) instead of the average value.

$$X = (x\text{-}xave) / \sigma \ldots (1)$$

where

X: standardized measurement data
x; measurement data before standardization
xave: average value of the measurement data
$\sigma$ : standard deviation of the measurement data

The normalization processing unit 41f normalizes the measurement data obtained by the second acquisition unit 45 using the maximum and minimum values of the detection result data specified in advance for data normalization before the start of mass molding production (Min-Max scale transformation). For example, the normalization processing unit 41f normalizes the detection result data so that the minimum value and the maximum value of the detection result data obtained by the second acquisition unit 45 is 0 and 1, respectively, as expressed in the following equation (2).

$$Y = (y\text{-}ymin)/(ymax\text{-}ymin) \ldots (2)$$

where

Y: normalized inspection result data
y: inspection result data before normalization
ymin: minimum value of the inspection result data
ymax: maximum value of the inspection result data

The observation unit 41a outputs the measurement data standardized by the standardization processing unit 41e and the inspection result data normalized by the normalization processing unit 41f as observation data to the agent 41c. Moreover, the observation unit 41a outputs the normalized inspection result data to the reward calculation unit 41b. In the case of calculating reward data taking the operation status of the injection molding machine 101 into account, the observation unit 41a may be configured to output the standardized measurement data to the reward calculation unit 41b along with the normalized inspection result data.

The reward calculation unit 41b calculates reward data obtained by evaluating the currently set molding conditions based on the data observed and obtained by the observation unit 41a, especially the inspection result data, and outputs the calculated reward data to the agent 41c. Specifically, the reward calculation unit 41b determines the value of the reward data based on the inspection result data such that the larger the burr area and short shot area are, the smaller the reward value is. If the burr area and the short shot area are zero, the value of the reward is maximized.

The agent 41c includes a reinforcement learning model with a deep neural network such as DQN (Deep Q-Network), A3C, D4PG or the like, or a model-based reinforcement learning model such as PlaNet, SLAC or the like. An example where the agent 41c is provided with DQN will be described below.

The agent 41c decides, using DQN, an action a corresponding to a state s based on the state s of the injection molding machine 101 indicated by the observation data. The state s according to the observation data includes measurement data and inspection result data.

DQN is a neural network model that outputs values of multiple actions a when the state s indicated by the observation data is input. The multiple actions a include items to be modified and a modification amount. The numerical range of the modification amount is normalized and is, for example, a value from 0 to 1. The action a having a high value represents a modification item and a modification amount for appropriate condition setting. The agent 41c selects the action a with a high value and shifts the state of the injection molding machine 101 to another state by the selected action a. After the transition of the state, the agent 41c receives the reward calculated by the reward calculation unit 41b and trains the agent 41c such that the return, that is, the accumulation of rewards is maximized.

More specifically, DQN has an input layer, an intermediate layer and an output layer. The input layer has multiple nodes to which states s, that is, observation data is input. The output layer has multiple nodes that respectively correspond to multiple actions a and output values Q (s, a) of the actions a in the input states s.

Using teacher data where the value Q in the following expression (3) is regarded as a correct value based on the state s, action a and reward r obtained from the action, various weight coefficients characterizing DQN may be modified to perform reinforcement learning on the DQN of the agent 41c.

$$Q (s, a) \leftarrow Q (s, a) + \alpha (r+\gamma \ maxQ (snext, a \ next) - Q (s, a))...(3)$$

where

s: state
a: action
$\alpha$ : learning rate
r: reward
$\gamma$ : discount rate
maxQ (snext, anext): maximum value of the Q values for the next possible action

The agent 41c is provided with an inverse conversion unit 41g for inversely converting the normalized modification amount of the molding condition to the actual modification amount. The agent 41c outputs the modification amount inversely converted by the inverse conversion unit 41g to the modification unit 41d.

The inverse conversion unit 41g inversely converts the modification amount using the maximum and minimum values for the modification amount specified in advance for normalization before the start of molding mass production (Min-Max scale conversion). For example, the inverse conversion unit 41g inversely converts the normalized modification amount calculated by the agent 41c to the actual modification amount, as expressed in equation (4) below.

$$Z = Z \times (zmax\text{-}zmin) + zmin...(4)$$

where

z: inversely converted modification amount
Z: normalized modification amount
zmin: minimum value of the modification amount
zmax: maximum value of the modification amount

The modification unit 41d modifies the molding conditions based on the modification amount calculated by the agent 41c, and provides the control signal output unit 43 with the modified molding conditions. The control signal output unit 43 outputs a control signal corresponding to the modified molding conditions to the molding machine body 1.

<Method for Generation and Application of Standard Model>

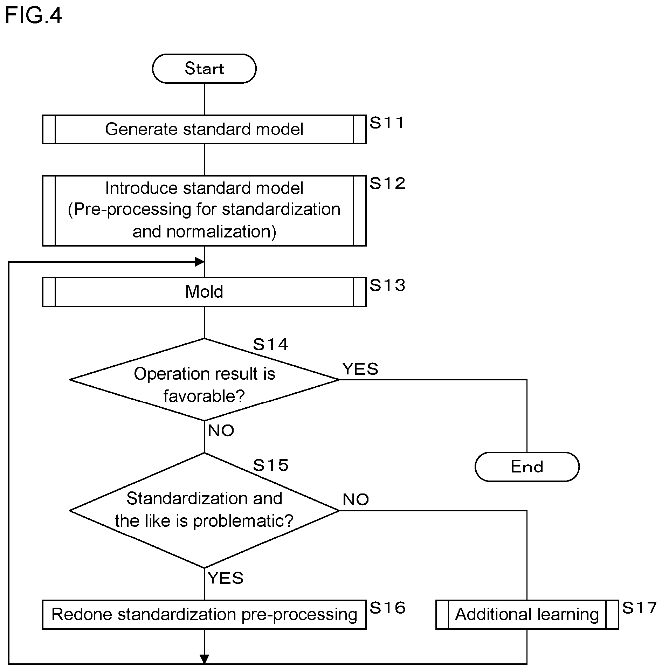

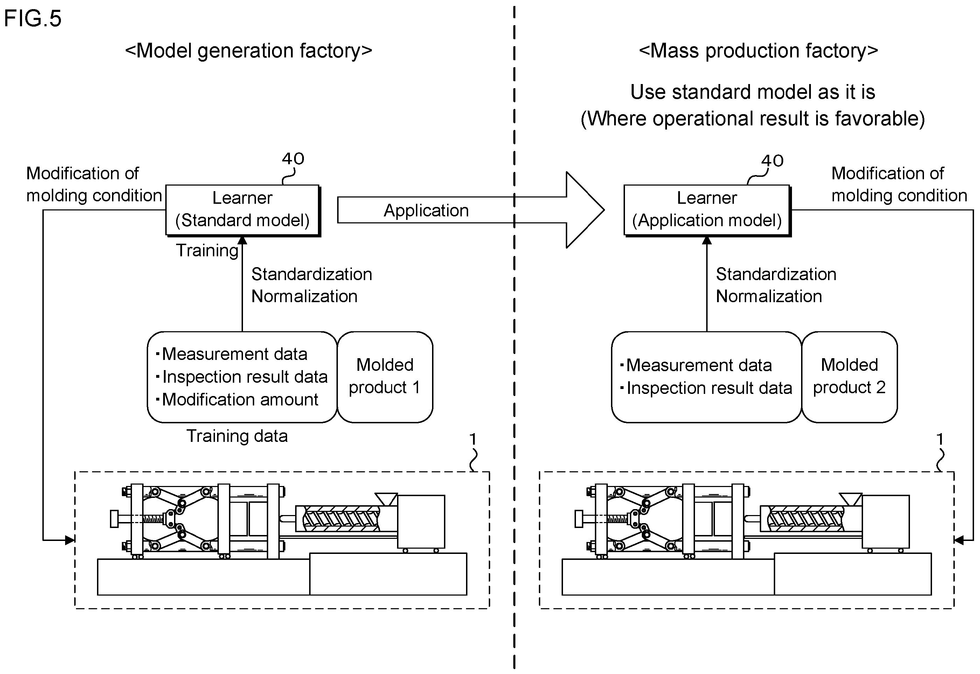

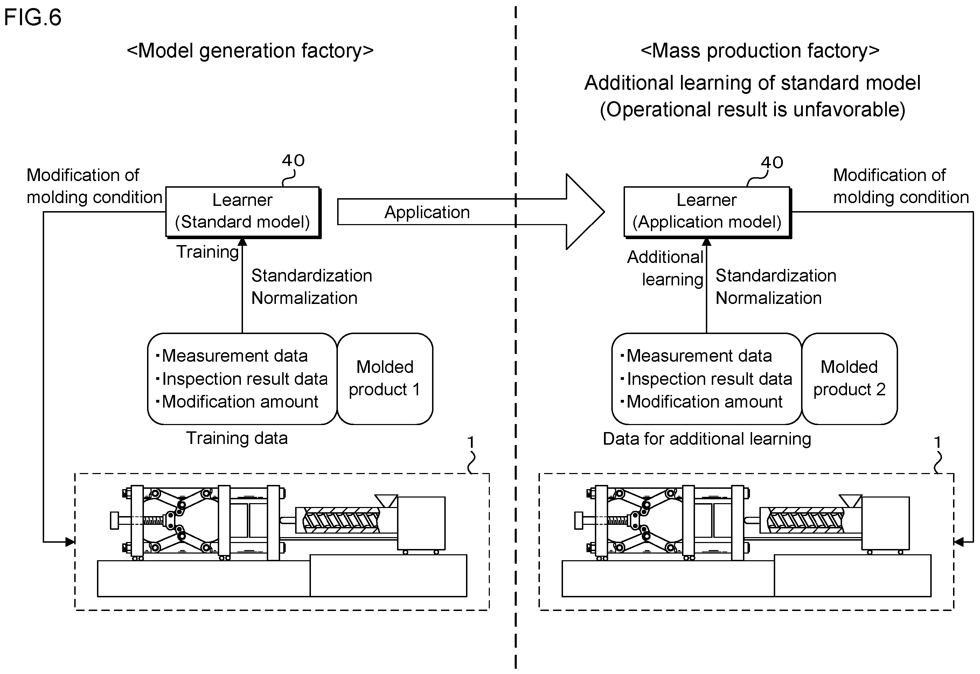

FIG. 4 is a flowchart depicting a generation and application method for the learner 40 (standard model) according to the present embodiment. FIG. 5 is a conceptual diagram depicting a method for application of the learner 40 (standard model) according to the present embodiment. FIG. 6 is a conceptual diagram depicting a method for additional learning of the learner 40 (standard model) according to the present embodiment.

First, a standard model to be used for molding condition modification specific to particular defects, for example, a burr and a short shot, that is, a standardized and normalized learner 40 is generated (step S11). The learner 40 as a standard model is generated in a model generation factory as illustrated in FIGs. 5 and 6, for example. The model generation factory is different from a mass production factory. For example, the model generation factory is the factory of a company that manufactures and sells the injection molding machine 101.

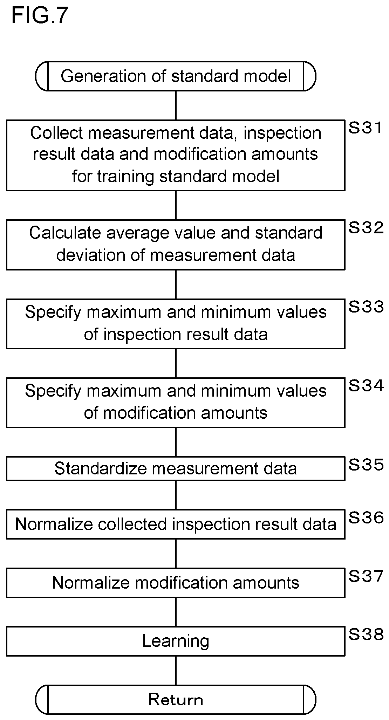

FIG. 7 is a flowchart depicting a processing procedure for generating the learner 40 (standard model). The present embodiment will be described below assuming that the injection molding machine 101 used in the model generation factory is similar to the injection molding machine 101 used in the mass production factory, and the learner 40 is produced through the processing by the processor 41.

By operating the injection molding machine 101 in the model generation factory, measurement data, inspection result data and modification amounts for training the standard model are collected (step S31).

The processor 41 then calculates an average value and a standard deviation of the collected measurement data (step S32). The processor 41 further specifies maximum and minimum values of the collected inspection result data (step S33). Likewise, the processor 41 specifies maximum and minimum values of the collected modification amounts (step S34).

The processor 41 then standardizes the collected measurement data based on the average value and standard deviation calculated at step S32 (step S35). The processor 41 further normalizes the collected inspection result data based on the maximum and minimum values calculated at step S33 (step S36). Likewise, the processor 41 normalizes the collected modification amounts based on the maximum and minimum values calculated at step S34 (step S37).

The processor 41 generates a learner 40 as a standard model by performing reinforcement learning of the relationship between the measurement data as well as inspection result data and the modification amount of the molding conditions based on the standardized and normalized measurement data, inspection result data and modification amount (step S38). The processor 41 stores various coefficients that characterize the generated learner 40 as a standard model in the storage unit 42.

Returning to FIG. 4 through FIG. 6, application of the standard model will be described. The worker who introduces the learner 40 installs the learner 40 generated by the processing at step S11 and steps S31 to S38 into the injection molding machine 101 placed in the mass production factory (step S12) and produces a molded product (step S13). The processing at step S13 is a molding process for evaluating the operation result of the learner 40 as a standard model. Note that mass production of a molded product may be started at step S13.

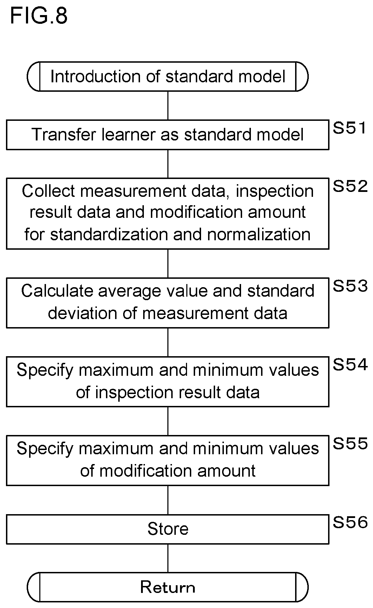

FIG. 8 is a flowchart depicting a processing procedure for introducing the learner 40 (standard model). The worker who introduces the learner 40 transfers the learner 40 as a standard model to the injection molding machine 101 at the mass production factory (step S51). More specifically, the worker transmits various coefficients that characterize the learner 40 of the standard model to the control device 4 of the injection molding machine 101 and stores them in the storage unit 42. The transfer of the learner 40 as a standard model may be carried out over a wired or wireless communication network, or may be transferred to the control device 4 via a portable recording medium. The metal mold 21 used in the injection molding machine 101 at the mass production factory is different from the metal mold 21 used in generating the standard model at the model generation factory.

The worker then operates the injection molding machine 101 before start of the mass production in the mass production factory and collects measurement data, inspection result data and modification amount for standardization and normalization (step S52). Because the data to be collected is for standardizing or normalizing the measurement data, the inspection result data and the modification amount, the injection molding machine 101 may be operated while changing the molding condition such that values of the respective data vary relatively significantly.

In the present embodiment, though an example where an average value and a standard deviation as well as minimum and maximum values for standardization and normalization are evaluated is described, the average value and standard deviation as well as minimum and maximum values for standardization and normalization calculated and specified in generating the standard model may be used as they are if appropriate.

Alternatively, an average value and a standard deviation as well as minimum and maximum values for standardization and normalization may be set at random without producing a molded product.

The processor 41 of the control device 4 calculates, based on the collected measurement data for standardization, an average value and a standard deviation of the measurement data (step S53). The processor 41 specifies, based on the collected inspection result data for normalization, maximum and minimum values of the inspection result data (step S54). Likewise, the processor 41 specifies, based on the collected modification amount for normalization, maximum and minimum values of the modification amount (step S55). The processor 41 stores the average value, standard deviation and maximum and minimum values for standardization and normalization in the storage unit 42 (step S56) and ends the processing.

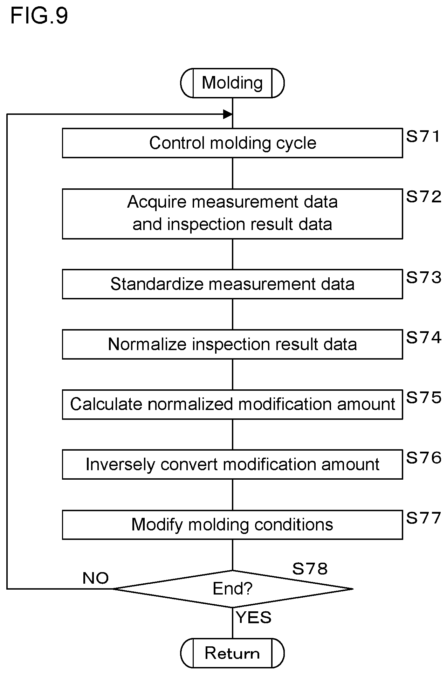

FIG. 9 is a flowchart depicting a processing procedure for molding. The processor 41 controls a molding cycle by regulating the operation of the injection molding machine 101(step S71). That is, the injection molding machine 101 is used to perform molding to produce a molded product. The molding cycle, for example, includes well-known mold closing process, mold clamping process, injection unit forward process, injection process, cooling process, measurement process, injection unit backward process, mold opening process and ejection process. The processor 41 controls the operation of the molding body 1 so as to execute these processes sequentially. Note that manufacturing a molded product once from the mold closing process to the ejection process is called one cycle, and the time required for one cycle is called a cycle time.

Next, the processor 41 respectively acquires measurement data and inspection result data from the first acquisition unit 44 and the second acquisition unit 45, respectively (step S72). The processor 41 standardizes the acquired measurement data based on the average value and standard deviance of the measurement data stored in the storage unit 42 (step S73). The processor 41 normalizes the acquired inspection result data based on the maximum and minimum values of the inspection result data stored in the storage unit 42 (step S74).

The processor 41 inputs the standardized and normalized measurement data and inspection result data to the agent 41c of the learner 40 to calculate a modification amount normalized for the molding conditions (step S75). The processor 41 inversely converts the normalized modification amount based on the maximum and minimum values of the modification amount stored in the storage unit 42 (step S76) and modifies the modification amount based on the inverselyconverted modification amount (step S77). The modified molding conditions are set, and the next molding is performed based on the modified molding conditions.

The processor 41, having completed the processing at step S77, determines whether or not manufacturing of molded products is to be ended (step S78). If determining that manufacturing of molded products is not to be ended (step S78: NO), the processor 41 returns the processing to step S71 to repeat a cycle of the molding processes. Note that the molding conditions may be modified each time a molded product is molded, or each time molding is carried out for a predetermined number of times. If determining that manufacturing of a molded product is to be ended (step S78: YES), the processor 41 ends the control processing according to a cycle of the molding processes.

Returning to FIGs. 4 through 6, processing such as additional learning based on the operational results using the standard model will be described. As a result of introducing the standard model and performing molding at steps S12 and S13, the worker who introduces the learner 40 determines whether or not the operation result of the learner 40 is favorable (step S14). For example, by intentionally setting molding conditions that are likely to cause molding defects and determining whether or not the number of occurrences of molding defects is improved within a predetermined number of times by modifying the molding conditions, it is determined whether or not the operational result of the leaner 40 is favorable. Whether or not the operational result of the learner 40 is favorable may also be determined depending on the failure rate for molded products produced when molding conditions that is likely to cause molding defects are intentionally set. The method of determining whether or not the operational result of the learner 40 is favorable is one example and is not limited to the above-mentioned method.

In the case where the performance of the learner 40 as the standard model is sufficiently high, the processing of application of the learner 40 may be ended without performing processing of determining whether or not the operation result is favorable and performing additional learning or the like (steps S14 to S17).

If determining that the operational result is favorable (step S14: YES), the processing concerning application of the learner 40 is completed. As illustrated in FIG. 5, the injection molding machine 101 can thereafter be operated using the standard model introduced in the injection molding machine 101 at the mass production factory as it is.

If determining that the operational result is unfavorable (step S14: NO), the worker who introduces the learner 40 determines whether or not failure of the operational result is due to standardization or normalization (step S15). If most of the standardized measurement data falls outside of 2 $\sigma$ or 3 $\sigma$, it is determined that standardization is problematic. Meanwhile, in the case where the values of the inspection result data or the modification amount are concentrated near the minimum or maximum values regardless of quality of the produced product, it is determined that normalization is problematic.

If it is determined that standardization or normalization is problematic (step S15: YES), the worker executes the pre-processing for the standardization and normalization that was performed at step S12 again (step S16) and returns the processing to step S13 as illustrated in FIG. 6.

If it is determined that neither standardization nor normalization is problematic (step S15: NO), the worker performs additional learning on the learner 40 (step S17) and returns the processing to step S13.

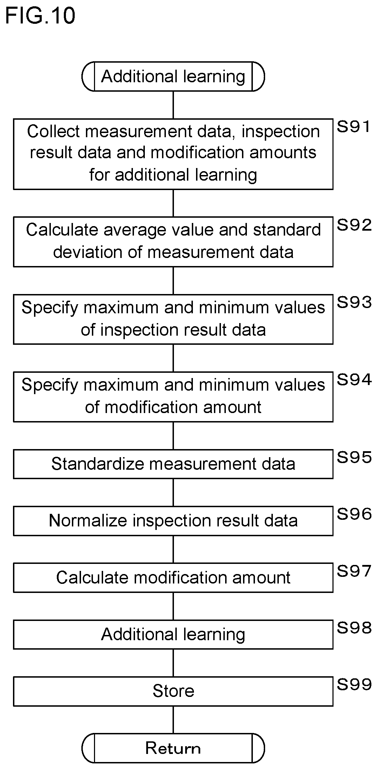

FIG. 10 is a flowchart depicting a processing procedure for additional learning of the learner 40 (standard model). The injection molding machine 101 is operated at the mass production factory to collect measurement data, inspection result data and modification amounts for additional learning (step S91).

The processor 41 then calculates an average value and a standard deviation of the collected measurement data (step S92). The processor 41 further specifies maximum and minimum values of the collected inspection result data (step S93). Likewise, the processor 41 specifies maximum and minimum values of the collected modification amount (step S94).

Next, the processor 41 then standardizes the collected measurement data based on the average value and standard deviation calculated at step S92 (step S95). The processor 41 further normalizes the collected inspection result data based on the maximum and minimum values calculated at step S93 (step S96). Likewise, the processor 41 normalizes the collected modification amount based on the maximum and minimum values calculated at step S94 (step S97).

The processor 41 additionally trains the learner 40 by performing reinforcement learning of the relationship between the measurement data as well as inspection result data and the modification amount of the molding conditions based on the standardized and normalized measurement data, inspection result data and modification amount (step S98). The processor 41 stores various coefficients that characterize the learner 40 having additionally trained in the storage unit 42 (step S99).

In the case where the learner 40 is used in the molding control processing after the additional learning, modification processing of the molding conditions may be performed using the average value, standard deviation, maximum and minimum values stored here.

The injection molding machine 101, control device 4 (molding condition modification device) and the like configured as above according to the present embodiment can apply the learner 40 as a standard model to modify the molding conditions for the injection molding.

Basically, the control device 4 of the injection molding machine 101 can modify the molding conditions using the learner 40 as the standard model as it is. Even if the operational result of the learner 40 is not favorable, the learner 40 can be additionally trained to thereby effectively modify the molding conditions. The learner 40, which has been standardized and normalized, can be additionally trained with less data than when not standardized and normalized.

Thus, it is possible to reduce the amount of training data to be collected that is required for introducing the learner 40 at the mass production factory. The reduced training data can reduce the number of defective products produced before the mass production process, so that the production plan of molded products at the mass production factory is less affected.

In particular, the measurement data, the inspection result data and the modification amount that are greatly associated with the modification of the molding conditions of the injection molding machine 101 are standardized or normalized to make the learner 40 as a standard model more versatile. Accordingly, the control device 4 of the injection molding machine 101 can effectively absorb the difference in the metal molds 21 and modify the molding conditions.

The measurement data is standardized and the inspection result data and the modification amount are normalized to thereby make the learner 40 as a standard model more versatile. Since the average value and standard deviation of measurement data vary depending on the difference in the metal molds 21, the characteristics of the measurement data can be more generalized by standardization than by normalization. Since the inspection result data corresponds to a burr area and a short shot area, normalization is more suitable than standardization. Since the modification amount corresponds to a modification amount for the molding condition, normalization is more suitable than standardization. The versatility of the learner 40 can be improved by using standardization and normalization depending on the characteristics of the data input to and output from the learner 40.

In addition, the learner 40 according to the present embodiment is a versatile model capable of modifying molding defects such as a burr and a short shot, and can modify the molding conditions so that a burr and a short shot do not occur by merely standardizing and normalizing the data even if metal molds 21 are replaced.

In the present embodiment, though application of the learner 40 for modifying the molding conditions of the injection molding machine 101 was described, the present technique may also be applied to the learner 40 that modifies the molding conditions of an extrusion machine and other molding machines.

Though an example was described where the measurement data, inspection result data and modification amount are standardized or normalized, any one or two of them may be standardized or normalized.

Furthermore, though an example of Ave-Std scale conversion of the measurement data and Min-Max scale conversion of the inspection result data and the modification amounts was described, the methods of standardization and normalization are mere examples, and standardization and normalization may be made by other well-known methods.

Moreover, in the present embodiment, though an example where generation of the standard model and introduction of the standard model are performed in different factories was described, they may be performed in the same factory.

In addition, in the present embodiment, though an example where molding conditions are modified using a reinforcement learning model was described, the learner 40 may be constructed with a supervised learning model. The learning model of the supervised learning is a learning model that, if receiving an input of measurement data and inspection result data, outputs optimal molding conditions and optimal molding amounts. The learning model can be generated using training data including measurement data and inspection result data attached with optimal molding conditions or optimal molding amounts as teacher data.

The means for solving the present disclosure is further described.

Clause 1

A molding condition modification device modifying a molding condition of a molding machine, comprising:

an acquisition unit that acquires measurement data obtained by measuring a state of the molding machine and inspection result data obtained by inspecting a state of a molded product molded by the molding machine; and
a learner having trained with a relationship between the measurement data as well as the inspection result data and a modification amount of the molding condition, and determining the modification amount based on the acquired measurement data and inspection result data, wherein
at least one of the measurement data, the inspection result data and the modification amount handled by the leaner is standardized or normalized.

Clause 2

The molding condition modification device according to clause 1, wherein the measurement data, the inspection result data and the modification amount are standardized or normalized data.

Clause 3

The molding condition modification device according to clause 1 or clause 2, wherein

the measurement data is data obtained by standardizing distribution of data, and

the inspection result data and the modification amount are data obtained by normalizing a minimum value and a maximum value.

Clause 4

The molding condition modification device according to any one of clauses 1 to 3, wherein

the acquisition unit
acquires the measurement data, the inspection result data and the modification amount for normalization and standardization before mass molding production,
the learner
calculates, based on the measurement data for standardization acquired by the acquisition unit, an average value and a standard deviation of the measurement data,
specifies, based on the inspection result data and the modification amount for normalization acquired by the acquisition unit, a minimum value and a maximum value of the inspection result data and the modification amount,
standardizes measurement data acquired by the acquisition unit at a time of mass molding production based on an average and a standard deviation calculated with the inspection result data for standardization,
normalizes inspection result data acquired by the acquisition unit at a time of mass molding production using a maximum value and a minimum value specified with the inspection result data for normalization, and
inversely converts the normalized modification amount determined by the learner using a maximum value and a minimum value specified with the modification amount for normalization.

Clause 5

The molding condition modification device according to any one of clauses 1 to 4, wherein

the acquisition unit
acquires the measurement data, the inspection result data and the modification amount for additional learning,
the learner
calculates, based on the measurement data for additional learning, an average value and a standard deviation of the measurement data,
standardizes the measurement data for additional learning based on the calculated average value and standard deviation,
specifies, based on the inspection result data and modification amount for additional learning, a minimum value and a maximum value of the inspection result data and the modification amount,
normalizes the inspection result data and the modification amount for additional learning based on the specified minimum value and maximum value, and
performing additional learning using the standardized and normalized measurement data, inspection result data and modification amount for additional learning.

Clause 6

The molding condition modification device according to any one of clauses 1 to 5, wherein

the learner
standardizes the measurement data acquired by the acquisition unit at a time of mass molding production using an average value and a standard deviation calculated with the measurement data for additional learning,
normalizes the inspection result data acquired by the acquisition unit at a time of mass molding production using a maximum value and a minimum value specified with the inspection result data for additional learning, and
inversely converts the normalized modification amount determined by the learner using a maximum value and a minimum value specified with the modification amount for the additional learning.

Clause 7

The molding condition modification device according to any one of clauses 1 to 6, wherein

the molding machine is an injection molding machine,
the measurement data includes a cycle time, an injection time, a holding pressure time, a holding pressure switch-over position, a holding pressure switch-over velocity, a holding pressure switch-over pressure, a cushion position, a holding pressure completion position, a weighing time, a back pressure or a weighing completion position,
the inspection result data includes an area of a burr and an area of a short shot of a molded product, and
the modification amount includes a modification amount of a holding pressure, a modification amount of a holding pressure switch-over position or a modification amount of an injection velocity.

Clause 8

A molding machine provided with the molding condition modification device according to any one of clauses 1 to 7.

| | |
|---|---|
| 1 | molding machine body |
| 1a | sensor |
| 2 | clamping device |
| 3 | injection device |
| 4 | control device |
| 5 | inspection device |
| 40 | learner |
| 41 | processor |
| 41a | observation unit |
| 41b | reward calculation unit |
| 41c | agent |
| 41d | modification unit |
| 41e | standardization processing unit |
| 41f | normalization processing unit |
| 41g | inverse conversion unit |
| 42 | storage unit |
| 42a | computer program |
| 43 | control signal output unit |
| 44 | first acquisition unit |
| 45 | second acquisition unit |
| 46 | operation panel |
| 49 | recording medium |
| 101 | injection molding machine |

**Claims**

1. A molding condition modification device modifying a molding condition of a molding machine, comprising:

   an acquisition unit that acquires measurement data obtained by measuring a state of the molding machine and inspection result data obtained by inspecting a state of a molded product molded by the molding machine; and
   a learner having trained with a relationship between the measurement data as well as the inspection result data and a modification amount of the molding condition, and determining the modification amount based on the acquired measurement data and inspection result data, wherein
   at least one of the measurement data, the inspection result data and the modification amount handled by the leaner is standardized or normalized.

2. The molding condition modification device according to claim 1, wherein the measurement data, the inspection result data and the modification amount are standardized or normalized data.

3. The molding condition modification device according to claim 1 or claim 2, wherein

the measurement data is data obtained by standardizing distribution of data, and
the inspection result data and the modification amount are data obtained by normalizing a minimum value and a maximum value.

4. The molding condition modification device according to any one of claims 1 to 3, wherein

the acquisition unit
acquires the measurement data, the inspection result data and the modification amount for normalization and standardization before mass molding production,
the learner
calculates, based on the measurement data for standardization acquired by the acquisition unit, an average value and a standard deviation of the measurement data,
specifies, based on the inspection result data and the modification amount for normalization acquired by the acquisition unit, a minimum value and a maximum value of the inspection result data and the modification amount,
standardizes measurement data acquired by the acquisition unit at a time of mass molding production based on an average and a standard deviation calculated with the inspection result data for standardization,
normalizes inspection result data acquired by the acquisition unit at a time of mass molding production using a maximum value and a minimum value specified with the inspection result data for normalization, and
inversely converts the normalized modification amount determined by the learner using a maximum value and a minimum value specified with the modification amount for normalization.

5. The molding condition modification device according to any one of claims 1 to 4, wherein

the acquisition unit
acquires the measurement data, the inspection result data and the modification amount for additional learning,
the learner
calculates, based on the measurement data for additional learning, an average value and a standard deviation of the measurement data,
standardizes the measurement data for additional learning based on the calculated average value and standard deviation,
specifies, based on the inspection result data and modification amount for additional learning, a minimum value and a maximum value of the inspection result data and the modification amount,
normalizes the inspection result data and the modification amount for additional learning based on the specified minimum value and maximum value, and
performing additional learning using the standardized and normalized measurement data, inspection result data and modification amount for additional learning.

6. The molding condition modification device according to claim 5, wherein

the learner
standardizes the measurement data acquired by the acquisition unit at a time of mass molding production using an average value and a standard deviation calculated with the measurement data for additional learning,
normalizes the inspection result data acquired by the acquisition unit at a time of mass molding production using a maximum value and a minimum value specified with the inspection result data for additional learning, and
inversely converts the normalized modification amount determined by the learner using a maximum value and a minimum value specified with the modification amount for the additional learning.

7. The molding condition modification device according to any one of claims 1 to 6, wherein

the molding machine is an injection molding machine,
the measurement data includes a cycle time, an injection time, a holding pressure time, a holding pressure switch-over position, a holding pressure switch-over velocity, a holding pressure switch-over pressure, a cushion position, a holding pressure completion position, a weighing time, a back pressure or a weighing completion position,
the inspection result data includes an area of a burr and an area of a short shot, and
the modification amount includes a modification amount of a holding pressure, a modification amount of a holding pressure switch-over position or a modification amount of an injection velocity.

8. A molding machine provided with the molding condition modification device according to any one of claims 1 to 7.

9. A molding condition modification method modifying a molding condition of a molding machine, comprising:

acquiring measurement data obtained by measuring a state of the molding machine and inspection result data obtained by inspecting a state of a molded product molded by the molding machine; and
determining a modification amount based on the acquired measurement data and inspection result data by using a learner having trained with a relationship between the measurement data as well as the inspection result data and the modification amount of the molding condition, wherein
at least one of the measurement data, the inspection result data and the modification amount handled by the leaner is standardized or normalized.

10. A computer program causing a computer to execute processing of modifying a molding condition of a molding machine, the computer executes processing of:

acquiring measurement data obtained by measuring a state of the molding machine and inspection result data obtained by inspecting a state of a molded product molded by the molding machine; and
determining a modification amount based on the acquired measurement data and inspection result data by using a learner having trained with a relationship between the measurement data as well as the inspection result data and the modification amount of the molding condition, wherein
the determining determines the modification amount using the learner for which at least one of the measurement data, the inspection result data and the modification amount is standardized or normalized.

FIG.1

101

FIG.2

Molding Machine Body ~1

1a~ Measurement data  Control signal  4

Control Device
(Molding Condition
Modification Device)

First Acquisition Unit 44

Control Signal Output Unit 43

Operation Panel 46

Processor 41
Learner (Standard Model) ~40

Second Acquisition Unit 45

Storage Unit 42
Computer Program ~42a

49

Inspection result data

Inspection Device ~5

FIG.3

FIG.4

```
                    ┌──────────────┐
                    │    Start     │
                    └──────────────┘
                            │
        ┌───────────────────────────────────┐ S11
        │      Generate standard model      │
        └───────────────────────────────────┘
                            │
        ┌───────────────────────────────────┐ S12
        │      Introduce standard model     │
        │  (Pre-processing for standardization
        │          and normalization)       │
        └───────────────────────────────────┘
                            │
        ┌───────────────────────────────────┐ S13
        │              Mold                 │
        └───────────────────────────────────┘
                            │
                          S14
              ◇ Operation result is ◇  YES ──────────┐
              ◇     favorable?      ◇                │
                         │ NO                        │
                                              ┌────────────┐
                        S15                   │    End     │
              ◇ Standardization and ◇  NO     └────────────┘
              ◇ the like is problematic? ◇ ──────┐
                         │ YES                    │
        ┌────────────────────────────┐ S16   ┌──────────────────┐ S17
        │ Redone standardization     │       │ Additional learning │
        │      pre-processing        │       └──────────────────┘
        └────────────────────────────┘
```

# FIG.5

<Model generation factory>

<Mass production factory>

Use standard model as it is
(Where operational result is favorable)

Modification of
molding condition

40

Learner
(Standard model)

Application

40

Learner
(Application model)

Modification of
molding condition

Training

Standardization
Normalization

Standardization
Normalization

·Measurement data
·Inspection result data
·Modification amount

Molded
product 1

·Measurement data
·Inspection result data

Molded
product 2

Training data

1

1

EP 4 620 651 A1

FIG.6

<Model generation factory>

<Mass production factory>

Additional learning of standard model
(Operational result is unfavorable)

Modification of
molding condition

Learner
(Standard model) 40

Application

Learner
(Application model) 40

Modification of
molding condition

Training

Standardization
Normalization

Additional
learning

Standardization
Normalization

·Measurement data
·Inspection result data
·Modification amount

Molded
product 1

·Measurement data
·Inspection result data
·Modification amount

Molded
product 2

Training data

Data for additional learning

1

1

EP 4 620 651 A1

FIG.7

```
    ( Generation of standard model )
                    |
  ┌─────────────────────────────────┐  S31
  │  Collect measurement data, inspection │
  │  result data and modification amounts  │
  │      for training standard model      │
  └─────────────────────────────────┘
                    |
  ┌─────────────────────────────────┐  S32
  │   Calculate average value and standard │
  │     deviation of measurement data     │
  └─────────────────────────────────┘
                    |
  ┌─────────────────────────────────┐  S33
  │  Specify maximum and minimum values  │
  │      of inspection result data       │
  └─────────────────────────────────┘
                    |
  ┌─────────────────────────────────┐  S34
  │  Specify maximum and minimum values  │
  │       of modification amounts        │
  └─────────────────────────────────┘
                    |
  ┌─────────────────────────────────┐  S35
  │       Standardize measurement data    │
  └─────────────────────────────────┘
                    |
  ┌─────────────────────────────────┐  S36
  │  Normalize collected inspection result data │
  └─────────────────────────────────┘
                    |
  ┌─────────────────────────────────┐  S37
  │       Normalize modification amounts   │
  └─────────────────────────────────┘
                    |
  ┌─────────────────────────────────┐  S38
  │              Learning                │
  └─────────────────────────────────┘
                    |
            (      Return      )
```

# FIG.8

Introduction of standard model

Transfer learner as standard model — S51

Collect measurement data, inspection result data and modification amount for standardization and normalization — S52

Calculate average value and standard deviation of measurement data — S53

Specify maximum and minimum values of inspection result data — S54

Specify maximum and minimum values of modification amount — S55

Store — S56

Return

FIG.9

```
                    ( Molding )

        ┌──────────────────────────────────┐  S71
        │       Control molding cycle       │
        └──────────────────────────────────┘

        ┌──────────────────────────────────┐  S72
        │       Acquire measurement data    │
        │       and inspection result data  │
        └──────────────────────────────────┘

        ┌──────────────────────────────────┐  S73
        │     Standardize measurement data  │
        └──────────────────────────────────┘

        ┌──────────────────────────────────┐  S74
        │    Normalize inspection result data│
        └──────────────────────────────────┘

        ┌──────────────────────────────────┐  S75
        │ Calculate normalized modification amount│
        └──────────────────────────────────┘

        ┌──────────────────────────────────┐  S76
        │  Inversely convert modification amount│
        └──────────────────────────────────┘

        ┌──────────────────────────────────┐  S77
        │      Modify molding conditions    │
        └──────────────────────────────────┘

    NO              ◇  End?  ◇           S78

                    YES

                  ( Return )
```

# FIG.10

```
          ┌─────────────────────┐
          │ Additional learning │
          └─────────────────────┘
                     │
  ┌──────────────────────────────────┐
  │ Collect measurement data,        │ S91
  │ inspection result data and       │
  │ modification amounts for         │
  │ additional learning              │
  └──────────────────────────────────┘
                     │
  ┌──────────────────────────────────┐
  │ Calculate average value and      │ S92
  │ standard deviation of            │
  │ measurement data                 │
  └──────────────────────────────────┘
                     │
  ┌──────────────────────────────────┐
  │ Specify maximum and minimum      │ S93
  │ values of inspection result data │
  └──────────────────────────────────┘
                     │
  ┌──────────────────────────────────┐
  │ Specify maximum and minimum      │ S94
  │ values of modification amount    │
  └──────────────────────────────────┘
                     │
  ┌──────────────────────────────────┐
  │ Standardize measurement data     │ S95
  └──────────────────────────────────┘
                     │
  ┌──────────────────────────────────┐
  │ Normalize inspection result data │ S96
  └──────────────────────────────────┘
                     │
  ┌──────────────────────────────────┐
  │ Calculate modification amount    │ S97
  └──────────────────────────────────┘
                     │
  ┌──────────────────────────────────┐
  │ Additional learning              │ S98
  └──────────────────────────────────┘
                     │
  ┌──────────────────────────────────┐
  │ Store                            │ S99
  └──────────────────────────────────┘
                     │
          ┌─────────────────────┐
          │       Return        │
          └─────────────────────┘
```

## INTERNATIONAL SEARCH REPORT

| International application No. |
| --- |
| **PCT/JP2023/033930** |

| A. | CLASSIFICATION OF SUBJECT MATTER |
| --- | --- |

*B29C 45/76*(2006.01)i
FI: B29C45/76

According to International Patent Classification (IPC) or to both national classification and IPC

| B. | FIELDS SEARCHED |
| --- | --- |

Minimum documentation searched (classification system followed by classification symbols)

B29C45/76

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2019-166702 A (JAPAN STEEL WORKS LTD.) 03 October 2019 (2019-10-03) claims | 1-3, 7-10 |
| Y | JP 2019-067138 A (FANUC CORP.) 25 April 2019 (2019-04-25) paragraph [0020] | 1-3, 7-10 |
| Y | JP 2022-141495 A (HITACHI, LTD.) 29 September 2022 (2022-09-29) paragraph [0107] | 1-3, 7-10 |
| A | JP 07-281898 A (OMRON CORP.) 27 October 1995 (1995-10-27) | 1-10 |
| A | JP 2021-191620 A (JTEKT CORP.) 16 December 2021 (2021-12-16) | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 November 2023** | **28 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
**Information on patent family members**

International application No.

**PCT/JP2023/033930**

| Patent document cited in search report | | | Publication date (day/month/year) | Patent family member(s) | | | Publication date (day/month/year) |
|---|---|---|---|---|---|---|---|
| JP | 2019-166702 | A | 03 October 2019 | US claims | 2021/0001526 | A1 | |
| | | | | WO | 2019/182145 | A1 | |
| | | | | DE | 112019001512 | T | |
| | | | | CN | 111886121 | A | |
| JP | 2019-067138 | A | 25 April 2019 | US paragraph [0038] | 2019/0101897 | A1 | |
| | | | | DE | 102018007641 | A1 | |
| | | | | CN | 109571897 | A | |
| JP | 2022-141495 | A | 29 September 2022 | WO | 2022/195974 | A1 | |
| JP | 07-281898 | A | 27 October 1995 | (Family: none) | | | |
| JP | 2021-191620 | A | 16 December 2021 | US | 2021/0379807 | A1 | |
| | | | | CN | 113752505 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019166702 A